# EUROPÄISCHE PATENTSCHRIFT

(11) **EP 3 645 210 B1**
(45) Veröffentlichungstag und Bekanntmachung des Hinweises auf die Patenterteilung: **20.01.2021**
(21) Anmeldenummer: 18729393.1
(22) Anmeldetag: 04.06.2018
(51) Int. Cl.: B23P 15/00, F16C 11/06

(54) **VERFAHREN ZUM HERSTELLEN EINES KUGELZAPFENS**
METHOD FOR PRODUCING A BALL STUD
PROCÉDÉ DE FABRICATION D'UN PIVOT À ROTULE

(30) Priorität: 28.06.2017 DE 102017210976
(43) Veröffentlichungstag der Anmeldung: 06.05.2020
(73) Patentinhaber: Audi AG, 85045 Ingolstadt (DE)
(72) Erfinder: BAIER, Sebastian, 36163 Poppenhausen (DE); FESSEL, Guido, 85049 Ingolstadt (DE)
(86) Internationale Anmeldenummer: PCT/EP2018/064607
(87) Internationale Veröffentlichungsnummer: WO 2019/001906

(56) Entgegenhaltungen:
- EP-A1- 2 239 087
- WO-A1-2007/148359
- DE-A1-102009 011 978
- DE-A1-102011 082 920
- DE-A1-102011 082 921

## Beschreibung

Die vorliegende Erfindung betrifft ein Verfahren zum Herstellen eines Kugelzapfens gemäß dem Oberbegriff des Patentanspruch 1.

Derartige Verfahren werden zum Herstellen eines Kugelzapfens, bestehend aus einem Schaft mit an einem axialen Ende aufgesetzter Gelenkkugel, verwendet. Es ist dabei erforderlich den Kugelzapfen bezüglich seiner Oberflächenbeschaffenheiten, insbesondere der Widerstandsfähigkeit gegen Korrosion, und seinen Härteeigenschaften in Hinblick auf den konkreten Anwendungsfall zu optimieren. Derzeit werden die Kugelzapfen (bis auf den Gewindebereich) komplett nitrocarburiert und oxidiert. Nachteilig ist die geringe Bruchdehnung der behandelten Oberfläche. Durch Hochlastereignisse kann es bereits bei geringen elastischen Verformungen zum Riss der Oberflächenbeschichtung im hochbeanspruchten Halsbereich zwischen Gelenkkugel und Schaft kommen. Dieser Anriss kann dann weiter wachsen und zum Bauteilversagen führen. Um dies zu verhindern, wird insbesondere der Halsbereich derzeit so groß dimensioniert, dass es zu keinen Anrissen kommt.

Die WO 2007/148359 A1 beschreibt ein Verfahren zum Herstellen eines Kugelzapfens mit den Schritten plastisches Deformieren eines als Metallscheibe ausgebildeten Rohlings zur Erzeugung eines Schafts und einer Gelenkkugel und durchführen einer Feinbearbeitung auf einer Außenfläche des Kugelzapfens zur Reduzierung der Rauigkeit.

Die gattungsbildende DE 10 2009 011 978 A1 offenbart ein Verfahren zur Herstellung eines Kugelzapfens mit einer Oberflächenbeschichtung gegen Korrosion, umfassend eine Gelenkkugel und einen Schaft, wobei der Kugelzapfen in axialer Richtung betrachtet in mehrere Zonen eingeteilt ist, wobei die Zonen jeweils mit einer ihre Beanspruchung berücksichtigende und darauf abgestimmte Oberflächenbeschichtung versehen sind, umfassend die Verfahrensschritte a) Herstellung des Kugelzapfens; b) Aufteilung des Kugelzapfens in axiale Richtung betrachtet unterschiedliche Zonen; c) zonenweises Aufbringen einer Oberflächenbeschichtung gegen Korrosion mittels eines thermischen Spritzverfahrens, wobei die Zonen jeweils mit einer ihre Beanspruchung berücksichtigende und darauf abgestimmte Oberflächenbeschichtung versehen werden

Die DE 10 2011 082920 A1 offenbart ein Verfahren nach dem Oberbegriff des Patentanspruchs 1.

Aufgabe der vorliegenden Erfindung ist es ein prozesssicheres Verfahren zum Herstellen eines Kugelzapfens mit geringem Gewicht bereitzustellen. Diese Aufgabe wird durch die Merkmale des Patentanspruchs 1 gelöst.

Ein Verfahren zum Herstellen eines Kugelzapfens mit einer Gelenkkugel und einem Schaft, wobei der Schaft zumindest einen sich an die Gelenkkugel anschließenden Halsbereich und einen der Gelenkkugel gegenüberliegenden Befestigungsabschnitt aufweist, gekennzeichnet durch die Schritte:
a) Plastisches Ausformen eines Kugelzapfenhalbzeugs;
b) Mechanische, insbesondere spanende, Bearbeitung des Kugelzapfenhalbzeugs;
c) Rollieren der Oberfläche der Gelenkkugel;
d) Thermochemisches Oberflächenhärten des Kugelzapfenhalbzeugs;
e) Entfernen der oberflächengehärteten Schicht mindestens in dem Halsbereich und/oder dem Befestigungsabschnitt, wobei mindestens 25µm der oberflächengehärteten Schicht entfernt werden;
f) Oxidieren des Kugelzapfenhalbzeugs;
g) Polieren der Gelenkkugel.

Nachdem der gesamte Kugelzapfen durch den thermochemischen Oberflächenhärtungsprozess behandelt wird, können durch das nachträgliche Entfernen der oberflächengehärteten Schicht in den entsprechenden Bereichen und die Oxidation die mechanischen Eigenschaften und die Korrosionseigenschaften gezielt beeinflusst werden. Somit weisen die oberflächengehärteten und oxidierten Bereiche eine hohe Verschleißfestigkeit und guten Korrosionsschutz auf, während sich die oxidierten Bereiche mit entfernter oberflächengehärteter Schicht durch eine hohe Duktilität sowie einen ausreichenden Korrosionsschutz auszeichnen. Insbesondere ist bei der Gelenkkugel eine hohe Verschleiß- und Korrosionsbeständigkeit erforderlich, während der Halsbereich und der Befestigungsabschnitt auch mit einer geringeren Verschleiß- und Korrosionsbeständigkeit auskommen. Dadurch erhält man einen idealen Kugelzapfen, der eine harte, abriebfeste Gelenkkugel mit optimalem Korrosions- und Verschleißschutz besitzt, während der Schaft vorwiegend eine duktile Oberfläche, die bei hohen Belastungen nicht anreißt, aufweist. Die Anforderung an die Korrosionsbeständigkeit im Schaft ist deutlich geringer, so dass hier eine Oxidation der nicht thermochemisch gehärteten Oberfläche ausreichend ist. Die Aufzählung der Verfahrensschritte stellt im Übrigen keine Festlegung auf deren genaue Reihenfolge dar. Wo es sich anbietet, können einzelne Schritte auch getauscht werden. Selbstverständlich beginnt das Verfahren mit dem Ausformen des Kugelzapfenhalbzeugs und dessen grober Bearbeitung. Allerdings kann beispielsweise die Gelenkkugel auch vor dem Polieren derselben rolliert werden. Alternativ kann das Polieren der Gelenkkugel auch nach dem Oberflächenhärten des Kugelzapfenhalbzeugs erfolgen. Das Oxidieren des Kugelzapfenhalbzeugs kann vor oder nach dem Entfernen der oberflächengehärteten Schicht mindestens in dem Halsbereich und/oder dem Befestigungsabschnitt erfolgen.

In einer bevorzugten Ausführung erfolgt das plastische Ausformen durch Schmieden.

In einer bevorzugten Ausführung wird in einem weiteren Schritt ein Gewinde in dem Befestigungsabschnitt ausgeformt. In einer besonders bevorzugten Ausführung wird das Gewinde durch Gewinderollen ausgeformt.

In einer bevorzugten Ausführung wird die oberflächengehärtete Schicht spanend entfernt. Dafür in Frage kommen unter anderem Drehen oder Schleifen.

Erfindungsgemäß werden mindestens 25µm der oberflächengehärteten Schicht entfernt.

In einer bevorzugten Ausführung ist das Oberflächenhärten ein Nitrocarburieren.

In einer bevorzugten Ausführung findet in einem weiteren Schritt ein thermisches Härten, insbesondere ein Induktionshärten, statt.

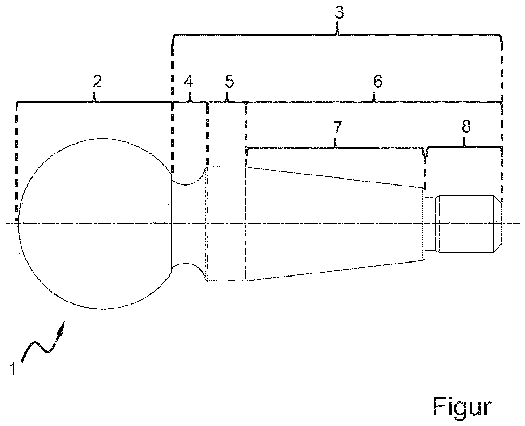

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die einzige Figur einen Kugelzapfen.

Der Kugelzapfen 1 besteht im Wesentlichen aus Gelenkkugel 2 und Schaft 3. Der Schaft 3 wiederum bildet sich, beginnend bei der Gelenkkugel 2, aus Halsbereich 4, zylindrischer Bereich 5 und Befestigungsabschnitt 6, wobei der Befestigungsabschnitt 6 wiederum aus Konusbereich 7 und Befestigungsbereich 8 besteht. Bei dem erfindungsgemäßen Verfahren zur Herstellung des Kugelzapfens 1 wird aus einem Rohling zunächst ein Kugelzapfenhalbzeug geschmiedet. Anschließend werden die eingangs genannten Bereiche durch vorzugsweise spanende Bearbeitung herausgearbeitet. Die Oberfläche der Gelenkkugel 2 wird dabei rolliert. Das Kugelzapfenhalbzeug wird als Ganzes nitrocarburiert, wobei in einem nächsten Schritt mindestens 25µm der nitrocarburierten Schicht in dem Halsbereich 4, dem zylindrischen Bereich 5 und dem Gewindebereich 8 spanend entfernt wird. Es bleiben somit die Gelenkkugel 2 und der Konusbereich 7 mit einer nitrocarburierten Randschicht versehen. In dem Gewindebereich 8 wird ein Gewinde ausgeformt und die Gelenkkugel 2 poliert. Das gesamte Kugelzapfenhalbzeug wird am Ende des Verfahrens oxidiert.

### Liste der Bezugszeichen:

- 1: Kugelzapfen
- 2: Gelenkkugel
- 3: Schaft
- 4: Halsbereich
- 5: zylindrischer Bereich
- 6: Befestigungsabschnitt
- 7: Konusbereich
- 8: Gewindebereich

## Patentansprüche

1. Verfahren zum Herstellen eines Kugelzapfens (1) mit einer Gelenkkugel (2) und einem Schaft (3), wobei der Schaft (3) zumindest einen sich an die Gelenkkugel (2) anschließenden Halsbereich (4) und einen der Gelenkkugel (2) gegenüberliegenden Befestigungsabschnitt (6) aufweist, **gekennzeichnet durch** die Schritte:
a) Plastisches Ausformen eines Kugelzapfenhalbzeugs;
b) Mechanische Bearbeitung des Kugelzapfenhalbzeugs;
c) Rollieren der Oberfläche der Gelenkkugel (2);
d) Thermochemisches Oberflächenhärten des Kugelzapfenhalbzeugs;
e) Entfernen der oberflächengehärteten Schicht mindestens in dem Halsbereich (4) und/oder dem Befestigungsabschnitt (6), wobei mindestens 25µm der oberflächengehärteten Schicht entfernt werden;
f) Oxidieren des Kugelzapfenhalbzeugs;
g) Polieren der Gelenkkugel (2).

2. Verfahren nach Anspruch 1, **dadurch gekennzeichnet, dass** das plastische Ausformen durch Schmieden erfolgt.

3. Verfahren nach Anspruch 1 oder 2, **dadurch gekennzeichnet, dass** in einem weiteren Schritt ein Gewinde in dem Befestigungsabschnitt ausgeformt wird.

4. Verfahren nach einem der Ansprüche 1 bis 3, **dadurch gekennzeichnet, dass** die oberflächengehärtete Schicht spanend entfernt wird.

5. Verfahren nach einem der Ansprüche 1 bis 5, **dadurch gekennzeichnet, dass** das thermochemische Oberflächenhärten ein Nitrocaburieren ist.

6. Verfahren nach einem der Ansprüche 1 bis 5, **dadurch gekennzeichnet, dass** in einem weiteren Schritt ein thermisches Härten stattfindet.

7. Verfahren nach Anspruch 6, **dadurch gekennzeichnet, dass** das thermische Härten als Induktionshärten erfolgt.

## Claims

1. Method for producing a ball stud (1) comprising a joint ball (2) and a shank (3), wherein the shank (3) comprises at least a neck region (4) adjoining the joint ball (2) and a fastening portion (6) opposite the joint ball (2), **characterised by** the steps:
a) plastic forming of a semi-finished ball stud product;
b) mechanical working of the semi-finished ball stud product;
c) rolling of the surface of the joint ball (2);
d) thermochemical surface hardening of the semi-finished ball stud product;
e) removal of the surface-hardened layer at least in the neck region (4) and/or the fastening portion (6), wherein at least 25µm of the surface-hardened layer is removed;
f) oxidising of the semi-finished ball stud product;
g) polishing of the joint ball (2).

2. Method according to claim 1, **characterised in that** the plastic forming occurs by forging.

3. Method according to claim 1 or 2, **characterised in that** in an additional step a thread is formed in the fastening section.

4. Method according to any one of claims 1 to 3, **characterised in that** the surface-hardened layer is removed by machining.

5. Method according to any one of claims 1 to 5, **characterised in that** the thermochemical surface hardening is a nitrocaburization.

6. Method according to any one of claims 1 to 5, **characterised in that** in an additional step a thermal hardening occurs.

7. Method according to claim 6, **characterised in that** the thermal hardening occurs as induction hardening.

## Revendications

1. Procédé de fabrication d'un pivot à rotule (1) avec une rotule (2) et une tige (3), dans lequel la tige (3) présente au moins une région formant col (4) se raccordant à la rotule (2) et une section de fixation (6) opposée à la rotule (2), **caractérisé par** les étapes suivantes :
a) mise en forme plastique d'un demi-pivot à rotule ;
b) traitement mécanique du demi-pivot à rotule ;
c) roulement de la surface de la rotule (2) ;
d) durcissement thermochimique en surface du demi-pivot à rotule ;
e) retrait de la couche durcie en surface au moins dans la région formant col (4) et/ou la section de fixation (6), dans lequel au moins 25 µm de la couche durcie en surface sont retirés ;
f) oxydation du demi-pivot à rotule ;
g) polissage de la rotule (2).

2. Procédé selon la revendication 1, **caractérisé en ce que** la mise en forme plastique est effectuée par forgeage.

3. Procédé selon la revendication 1 ou 2, **caractérisé en ce que**, dans une étape ultérieure, un filetage est mis en forme dans la section de fixation.

4. Procédé selon l'une quelconque des revendications 1 à 3, **caractérisé en ce que** la couche durcie en surface est retirée par usinage.

5. Procédé selon l'une quelconque des revendications 1 à 5, **caractérisé en ce que** le durcissement thermochimique en surface est une nitrocaburation.

6. Procédé selon l'une quelconque des revendications 1 à 5, **caractérisé en ce qu'**un durcissement thermique a lieu dans une étape ultérieure.

7. Procédé selon la revendication 6, **caractérisé en ce que** le durcissement thermique est effectué comme un durcissement par induction.
